# EUROPÄISCHE PATENTSCHRIFT

(11) **EP 1 531 011 B1**
(45) Veröffentlichungstag und Bekanntmachung des Hinweises auf die Patenterteilung: **04.04.2007**
(21) Anmeldenummer: 04405694.3
(22) Anmeldetag: 11.11.2004
(51) Int. Cl.: B05C 17/01

(54) **Elektrisch betriebenes Kartuschenaustraggerät**
Electrically driven dispensing device for material in cartridges
Appareil électrique de distribution de matériau en cartouches

(30) Priorität: 13.11.2003 CH 19542003
(43) Veröffentlichungstag der Anmeldung: 18.05.2005
(73) Patentinhaber: Mixpac Systems AG, 6343 Rotkreuz (CH)
(72) Erfinder: Keller, Wilhelm A., 6402 Merlischachen (CH)
(74) Vertreter: AMMANN PATENTANWÄLTE AG BERN

(56) Entgegenhaltungen:
- EP-A- 0 822 009
- DE-A- 19 850 495
- US-A- 4 264 021

## Beschreibung

Die vorliegende Erfindung bezieht sich auf ein elektrisch betriebenes Kartuschenaustraggerät gemäss Oberbegriff von Patentanspruch 1. Elektrisch betriebene Austraggeräte, insbesondere für das Austragen von 2-Komponenten Materialien für Zahnabdrücke, sind beispielsweise aus der EP-A2-1 101 538 bekannt, wobei ein elektrischer Motor auf Gewindespindeln wirkt, um diese mit den damit verbundenen Stösseltellern anzutreiben und die beiden Komponenten auszutragen. Aus der EP-B-492 413 ist ein weiteres Gerät bekannt, in welchem eine Magnetkupplung verwendet wird, um den Vorschubantrieb von einem mit Ketten gezogenen Stösselschlitten abzukoppeln. Beiden beschriebenen Antrieben ist gemeinsam, dass sie kompliziert und daher aufwendig konstruiert sind oder einen relativ hohen Platzbedarf aufweisen. Ausserdem ist aus der EP-B1-0 586 342 oder aus der DE-A-3 128 611 ein Gerät für Handbetrieb bekannt, bei welchem ein Klemmhebel auf die Austragstössel wirkt, wobei dieser Klemmhebel verkantet wird. Bei diesen Ausführungen ist das Augenmerk unter anderem darauf gerichtet, die Kräfte vom um einen Drehpunkt drehenden Betätigungshebel möglichst rationell auf geradlinig vorwärts bewegte Stössel zu übertragen.

Aus der DE-A-198 50 495 ist ein Handauspressgerät mit Antriebsmotor nach dem Oberbegriff des Anspruchs 1 bekannt, bei dem der Motor über ein Getriebe und Antriebswelle auf eine Exzenterscheibe wirkt, die auf einen Schieber und dann auf die Stössel wirkt. Die EP-A-822 009 offenbart ein Austraggerät, worin ein Motor über eine Exzenterscheibe auf einen Schwingarm wirkt, der seinerseits auf federbeaufschlagte Klemmhebel wirkt. Die US-A-4 264 021 schlieslich offenbart ein Austraggerät mit einem Motor, der über Schneckengetriebe und Nocken auf eine Klemmhebelplatte wirkt, die die Stössel antreibt.

Es ist von diesem bekannten Stand der Technik ausgehend Aufgabe der vorliegenden Erfindung ein elektrisch betriebenes Kartuschenaustraggerät anzugeben, das einen einfach aufgebauten und platzsparenden Antrieb der Austragstössel aufweist. Ein solches Gerät ist in Patentanspruch 1 definiert.

Die Erfindung wird im Folgenden anhand von Zeichnungen eines Ausführungsbeispiels näher erläutert.
- Fig. 1: zeigt in perspektivischer Sicht und teilweise geschnitten den erfindungswesentlichen Teil eines Austraggerätes,
- Fig. 2: zeigt in einem Längsschnitt das Gerät von Fig. 1,
- Fig. 3: zeigt in einem Schnitt und in einer Ausschnittsvergrösserung die Ausgangsstellung des Gerätes gemäss Fig. 2,
- Fig. 4: zeigt einen Schnitt gemäss der Linie IV-IV in Fig. 3,
- Fig. 5: zeigt in einem Schnitt und in einer Ausschnittsvergrösserung das Gerät in der Klemmstellung,
- Fig. 6: zeigt einen Schnitt gemäss der Linie VI-VI in Fig. 5,
- Fig. 7: zeigt in einem Schnitt und in einer Ausschnittsvergrösserung das Gerät am Ende des Austragvorganges, und
- Fig. 8: zeigt einen Schnitt gemäss der Linie VIII-VIII in Fig. 7.

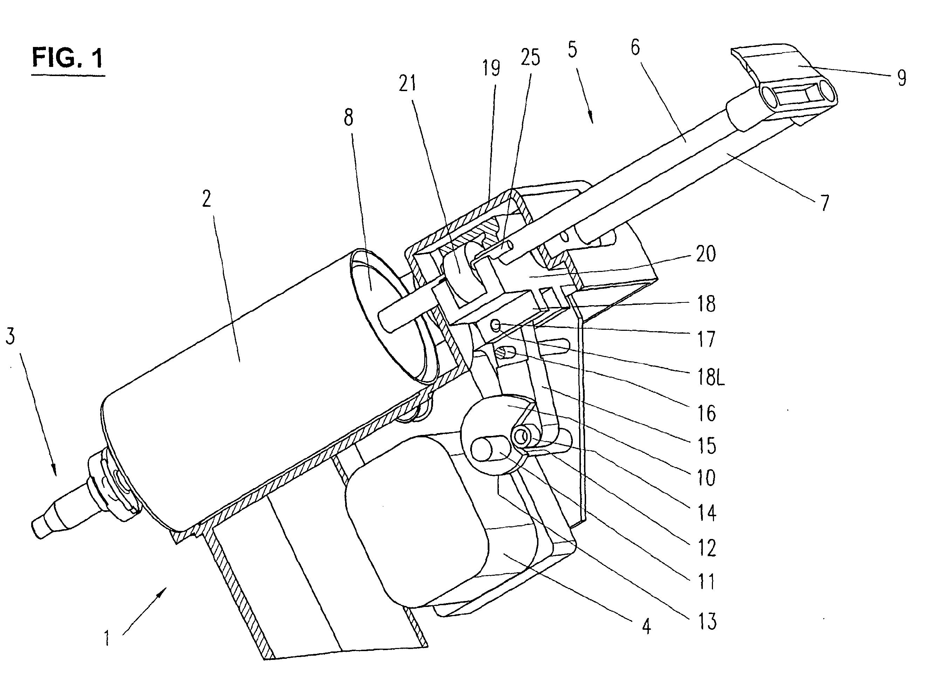

In Fig. 1 erkennt man einen Teil des Gehäuses 1 eines Tischgerätes, wie es eingangs erwähnt worden ist, wobei das Gehäuse und die Kartuschenaufnahme als bekannt vorausgesetzt werden. Ferner ist in Fig. 1 ein Vorratsbehälter der Doppelkartusche 2 und ein dynamischer Mischer 3 dargestellt, wie er beispielsweise in der EP-A2-1 106 243 beschrieben ist. Ein elektrischer Motor 4 treibt über einen weiter unten näher beschriebenen Antrieb einen Doppelstössel 5 mit zwei Stösselstangen 6 und 7 und Stösselteller 8 an, wodurch die beiden Komponenten in den Vorratsbehältern der Kartusche zum dynamischen Mischer gelangen und dort vermischt werden. Die beiden Stösselstangen 6 und 7 sind über einen Griff 9 miteinander verbunden.

Der elektrische Motor 4 wirkt auf eine Kurvenscheibe 10, die um eine Drehachse 11 im Gehäuse drehbar gelagert ist und im Wesentlichen zwei Antriebsflächen aufweist, die steile Klemmrampe 12 und die Austragfläche 13. Die Kurvenscheibe wirkt auf eine Kurvenscheiben-Ablaufrolle 14, die an einem Hebel 15 befestigt ist, der um Hebeldrehachse 16 dreht, die im Gehäuse gelagert ist. Über der Drehachse ist der Hebel 15 über eine Achse 17 an einer Gabel 18 eines quaderförmigen Antriebsblocks 20 angelenkt, wobei die Achse 17 in einem Langloch 18L läuft. Der Antriebsblock 20 befindet sich in einem U-förmigen Gehäuseteil 19 und die Stösselstangen 6 und 7 sind sowohl im U-förmigen Gehäuseteil als auch im Antriebsblock 20 in Bohrungen geführt.

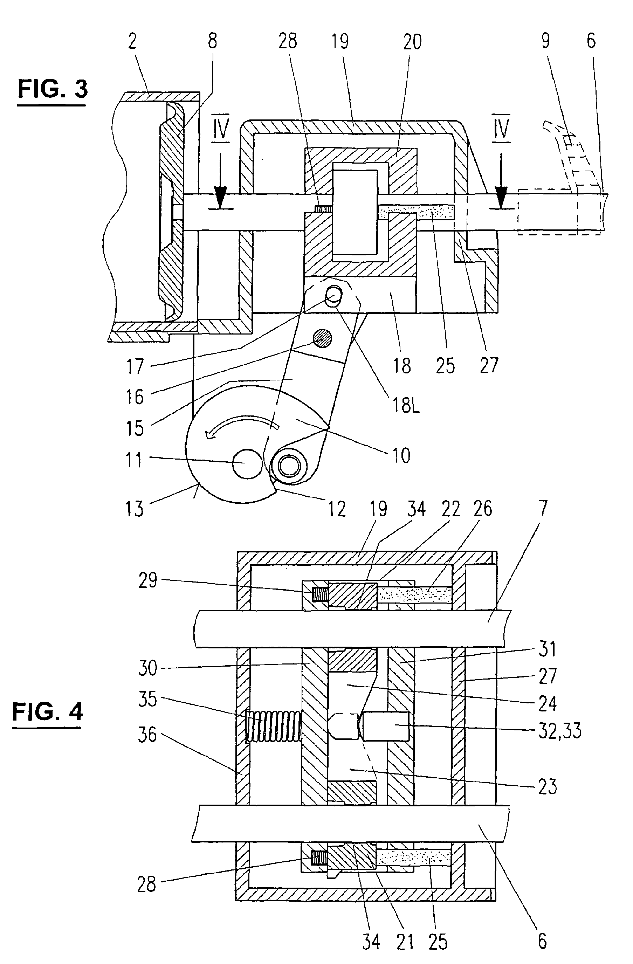

Wie in Figur 4, 6 oder 8 ersichtlich, greift im quaderförmigen Antriebsblock 20 um jede Stösselstange das Klemmteil 21, 22 eines einwärts gerichteten Klemmhebels 23, 24. Durch die rückwärtige Antriebsblockwand 31 ist für jedes Klemmteil ein Ausrichtstift 25, 26 geführt, der sich an einem Ende an der bezüglich der Kartuschen rückwärtigen Wand 27 des U-förmigen Gehäuseteils 19 und am anderen Ende - in der Ausgangsstellung - am Klemmteil abstützt, um diesen nach Beendigung des Rückhubes wieder in die nichtklemmende Ausgangsstellung zu bringen. Am vorderen Ende des Klemmteils ist eine Druckfeder 28, 29 in der vorderen Wand 30 des Antriebsblocks eingelassen, die die Klemmteile Richtung Ausrichtstifte drückt. In der rückwärtigen Antriebsblockwand 31 ist gegenüber jedem Klemmhebel ein Anstellstift 32, 33 eingelassen.

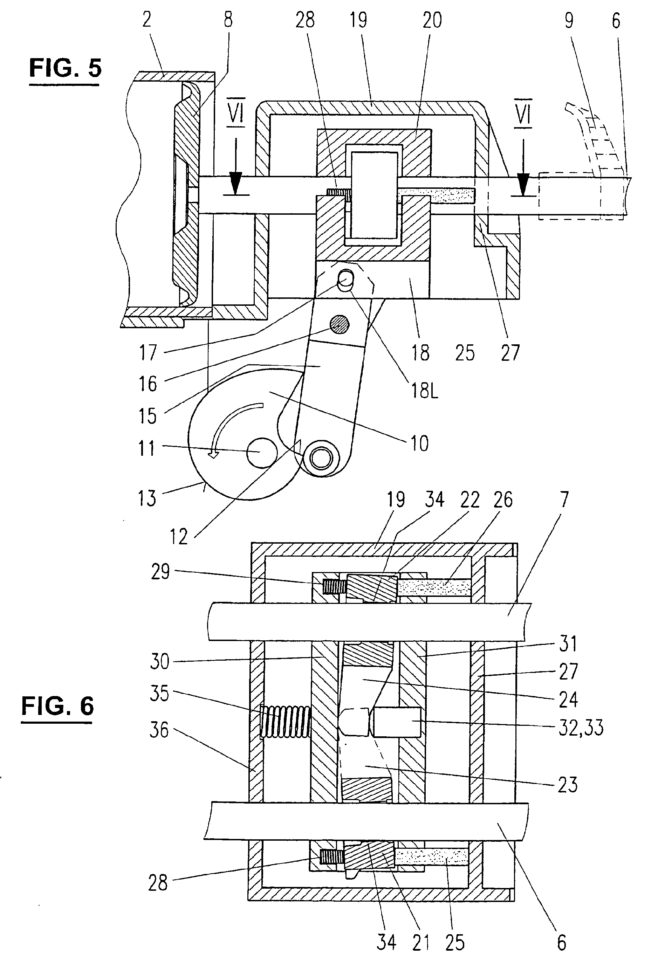

Die beiden Klemmteile 21 und 22 sind nicht ganz formschlüssig um die Stösselstangen angeordnet und weisen je eine Bohrung 34 auf, die etwas grösser ist als der Durchmesser der Stösselstangen, so dass die Klemmteile die Möglichkeit haben, sich zu verkanten, wie ein Vergleich der Fig. 4 und 6 zeigt.

In der Ausgangsstellung der Figuren 3 und 4 drückt eine symbolisch dargestellte Rückstellfeder 35, die an der vorderen Wand 36 des U-förmigen Gehäuseteils 19 befestigt ist, den Antriebsblock 20 in Richtung Wand 27, wodurch die Druckfedern 28, 29 mittels der Ausrichtstifte 25, 26 zusammengedrückt werden. Dadurch sind die Klemmteil-Bohrungen 34 parallel zu den Stösselstangen ausgerichtet und die Stösselstangen manuell betätigbar. Mit dieser Anordnung ist gewährleistet, dass die Klemmhebel angestellt werden, sobald sich der Antriebsblock 20 in Austragrichtung bewegt. Anstatt einer Druckfeder zwischen Gehäuse und Antriebsblock kann auch eine geeignete Federanordnung am Hebel 15 angebracht werden, um diesen vorwärts und damit den Antriebsblock rückwärts zu schieben.

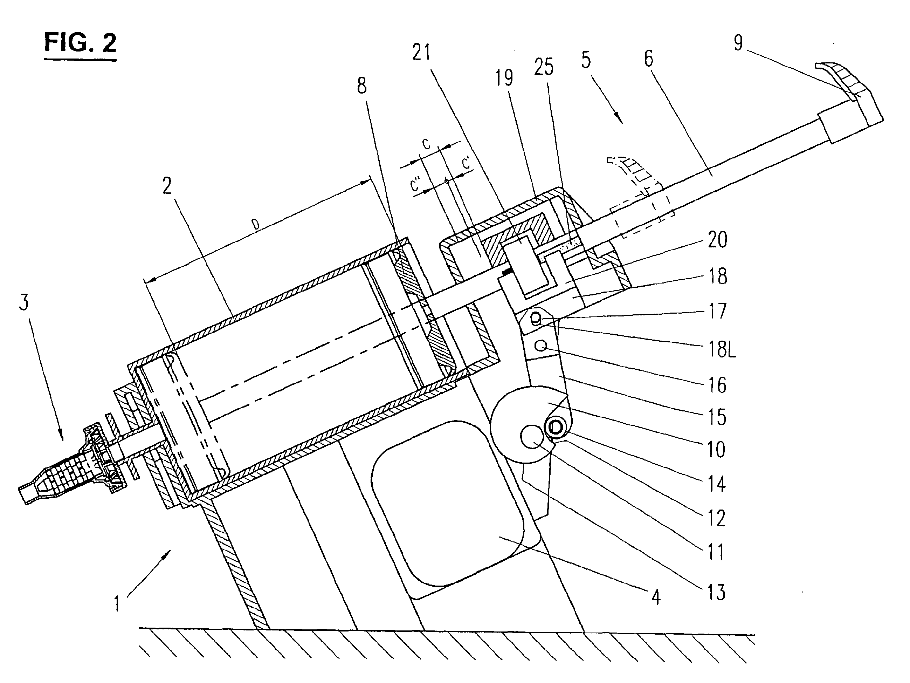

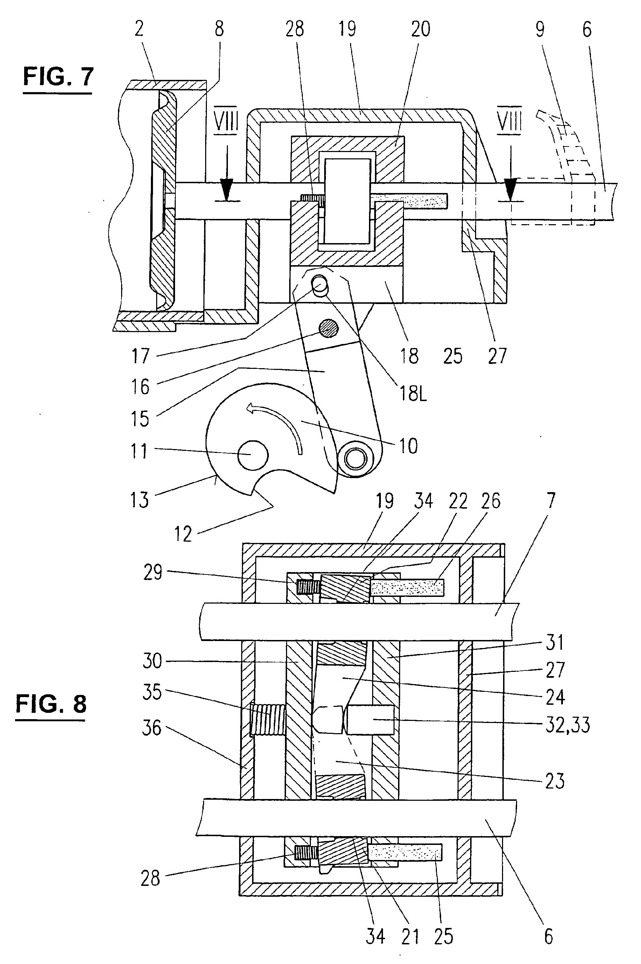

In der Stellung der Figuren 7 und 8 hat die Kurvenscheibe nahezu das Ende der Austragfläche erreicht und die Klemmteile sind immer noch in der Klemmstellung. Der Antriebsblock und mit ihm die Stösselstangen haben dann den vollen Arbeitshub C'' erreicht, siehe Figur 2.

Beim Betätigen eines nicht eingezeichneten Schalters wird der Motor in Gang gesetzt und die Kurvenscheibe in Pfeilrichtung in Rotation versetzt. Beginnend von der Stellung in Figur 3 beaufschlagt die steile Klemmrampe 12 der Kurvenscheibe die Kurvenscheiben-Ablaufrolle 13, wodurch über Hebel 15 Antriebsblock 20 in Richtung der Kartusche vorwärts bewegt wird. Damit werden die Klemmteile freigegeben und durch die Druckfedern in Richtung rückwärtige Antriebsblockwand 31 gedrückt. Durch Einwirkung der Anstellstifte 32, 33 auf die Klemmhebel 23, 24 werden die Klemmteile verkantet und bewirken eine feste Verbindung zwischen Antriebsblock 20 und Stösselstangen.

In der Stellung der Figuren 5 und 6 sind die Klemmteile maximal verkantet und der Arbeitshub, durch die Austragfläche der Kurvenscheibe verursacht, beginnt.

In der Stellung der Figuren 7 und 8 am Ende der Austragfläche ist der Arbeitshub C'' beendet und die Kurvenscheibe erreicht nach 360° Drehung die Ausgangs- und Ruhestellung von Figur 3. Zwischen dem Ende der Austragfläche und Beginn der steilen Klemmrampe drückt die Rückstellfeder 35 den Antriebsblock in die Ausgangsstellung. Die Ausrichtstifte 25, 26 richten die Klemmteile parallel zu den Stösselstangen aus, wodurch sie freigegeben werden und manuell zurückgezogen werden können.

In Fig. 2 ist dargestellt, dass die Kurvenscheibe, bei einer Rotation von 360°, auf die Stösselstangen zuerst einen Klemmhub C' und dann einen maximalen Arbeitshub C'' bewirkt. Der Austrag kann aber auch schon vorher, d.h. bei geringerem Arbeitshub angehalten werden. Nach jedem Teilarbeitshub wird die Kurvenscheibe durch Zurückdrehen in die Ausgangsstellung gebracht und dort werden die Stössel durch Ausrichten der Klemmhebel mittels der Ausrichtstifte freigegeben. Somit können die Stössel manuell zurückgezogen und die Kartusche entfernt werden. Der gesamte Systemhub D, d.h. das gesamte Austragen des Kartuscheninhaltes, wird dadurch erreicht, dass man den Arbeitshub C'' oder auch Teile davon hintereinander wiederholt.

## Patentansprüche

1. Elektrisch betriebenes Kartuschenaustraggerät, mit Stösselstangen aufweisenden Austragstösseln und einem auf die Stösselstangen wirkenden elektrischen Motor, **dadurch gekennzeichnet, dass** der elektrische Motor (4) über einen Hebel (15) auf die Stösselstangen (6, 7) beaufschlagenden und bewegenden Klemmhebel (21, 22, 23, 24) wirkt.

2. Kartuschenaustraggerät nach Anspruch 1, **dadurch gekennzeichnet, dass** der elektrische Motor (4) eine den Hebel (15) beaufschlagende Kurvenscheibe (10) antreibt.

3. Kartuschenaustraggerät nach Anspruch 2, **dadurch gekennzeichnet, dass** die Kurvenscheibe (10) eine steile Klemmrampe (12) zur Erzielung der Klemmwirkung und eine Austragfläche (13) zum Vorwärtsbewegen der Stösselstangen (6, 7) aufweist.

4. Kartuschenaustraggerät nach einem der Ansprüche 1 bis 3, **dadurch gekennzeichnet, dass** der Hebel (15) an einem quaderförmigen Antriebsblock (20) angelenkt ist, in dem die Klemmhebel (23, 24) angeordnet sind, wobei die Klemmteile (21, 22) der Klemmhebel auf der bezüglich der Kartusche vorderen Seite durch Druckfedern (28, 29) beaufschlagt sind und an ihrer anderen Seite auf in der hinteren Blockwand (31) geführten Ausrichtstiften (25, 26), die sich an der hinteren Gehäusewand (27) aufstützen, aufliegen und die Klemmhebel (23, 24) an ihrem Ende von je einem Anstellstift (32, 33) beaufschlagt werden, sobald die Kurvenscheibe angetrieben ist, um die Klemmteile zu verkanten und die Stössel in Richtung Kartusche zu bewegen.

## Claims

1. Electrically operated cartridge dispensing appliance that includes dispensing rams with thrust rods and an electric motor acting upon the thrust rods, **characterised in that** the electric motor (4) acts via a lever (15) upon a clamping lever (21, 22, 23, 24) that actuates and moves the thrust rods (6, 7).

2. Cartridge dispensing appliance according to claim 1, **characterized in that** the electric motor (4) drives a cam disk (10) that actuates the lever (15).

3. Cartridge dispensing appliance according to claim 2, **characterized in that** the cam disk (10) has a steep clamping ramp (12) for achieving the clamping action and a dispensing surface (13) for advancing the thrust rods (6, 7).

4. Cartridge dispensing appliance according to one of claims 1 to 3, **characterized in that** the lever (15) is hinged to a cuboidal driving block (20) in which the clamping levers (23, 24) are arranged, the clamping portions (21, 22) of the clamping levers being under the action of compression springs (28, 29) on their front sides with respect to the cartridge and the other sides resting on aligning pins (25, 26) that are guided in the rear wall (31) of the block and are supported on the rear wall (27) of the enclosure, and **in that** the ends of the clamping levers (23, 24) are under the action of respective canting pins (32, 33) as soon as the cam disk is being driven, thereby canting the clamping portions and moving the thrust rods in the direction of the cartridge.

## Revendications

1. Distributeur électrique à cartouches, comprenant des poussoirs de distribution munis de tiges de poussoir et un moteur électrique agissant sur les tiges de poussoir, **caractérisé en ce que** le moteur électrique (4) agit par l'intermédiaire d'un levier (15) sur un levier de serrage (21, 22, 23, 24) qui actionne et déplace lesdites tiges de poussoir (6, 7).

2. Distributeur à cartouches selon la revendication 1, **caractérisé en ce que** le moteur électrique (4) entraîne un disque à came (10) qui actionne ledit levier (15).

3. Distributeur à cartouches selon la revendication 2, **caractérisé en ce que** le disque à came (10) présente une rampe de serrage (12) raide pour produire l'effet de serrage et une surface de distribution (13) pour avancer les tiges de poussoir (6, 7).

4. Distributeur à cartouches selon l'une des revendications 1 à 3, **caractérisé en ce que** le levier (15) est articulé sur un bloc d'entraînement (20) cuboïde dans lequel sont agencés les leviers de serrage (23, 24), les éléments de serrage (21, 22) des leviers de serrage étant sous l'action de ressorts de pression (28, 29) du côté avant par rapport à la cartouche et reposant de l'autre côté sur des chevilles d'alignement (25, 26) qui sont guidées dans la paroi arrière (31) dudit bloc et s'appuient sur la paroi arrière (27) du boîtier, et **en ce que** les leviers de serrage (23, 24) sont sous l'action, dès que le disque à came est entraînée, de chevilles de calage (32, 33) respectives afin de caler les éléments de serrage et déplacer les poussoirs dans la direction de la cartouche.
